# EUROPEAN PATENT APPLICATION

(11) **EP 1 566 954 A2**
(43) Date of publication of application: **24.08.2005**
(21) Application number: 05250717.5
(22) Date of filing: 08.02.2005
(51) Int. Cl.: H04M 3/493, G10L 15/22, G10L 15/18, G10L 15/26

(54) **Method and system for navigating applications**

(30) Priority: 20.02.2004 US 783832
(71) Applicant: LUCENT TECHNOLOGIES INC., Murray Hill, New Jersey 07974-0636 (US)
(72) Inventor: Stoops, Daniel S., Galena, Ohio 43021 (US); Webb, Jeffrey J., Gahanna, Ohio 43230 (US)
(74) Representative: Watts, Christopher Malcolm Kelway

(57) **Abstract**

A root grammar is provided to facilitate navigation between speech centric applications in a communications network. The root grammar may be constructed from the application grammars of the supported applications. During recognition processing, the root grammar may be combined with a current application's active grammar to produce a composite grammar. Audio communications recognized as part of the composite grammar may be used to service the current application, to navigate between applications, and/or to access different parts or documents of applications directly without navigating through intervening levels. In particular, from a user's perspective, another application or document referenced by the root grammar may be accessed directly, as opposed to employing a lengthier navigation process.

## Description

### BACKGROUND OF THE INVENTION

### 1. Field Of The Invention

The present invention relates generally to accessing applications over communication systems and, more particularly, to navigating between applications.

### 2. Description Of The Related Art

This section is intended to introduce the reader to various aspects of art that may be related to various aspects of the present invention, which are described and/or claimed below. This discussion is believed to be helpful in providing the reader with background information to facilitate a better understanding of the various aspects of the present invention. Accordingly, it should be understood that these statements are to be read in this light, and not as admissions of prior art.

Over the past several decades, communications systems, including wire line and wireless communications systems, have steadily evolved. One example of this evolution is the continuing adoption and growing prevalence of cellular telephone systems. As one might expect, the limited number of potential cellular service subscribers has lead to competition between the various cellular service providers to protect and grow their subscriber bases.

In response to this competition for subscribers, cellular service providers have expanded the services they provide from basic telephony to include access to a wide range of other applications. For example, voice mail and conference calling applications may be provided to subscribers. Similarly, content-driven applications, such as scheduling, news, sports, weather, and financial applications, may also be made available to subscribers. Such applications typically allow the subscriber to access personal or third party content, such as appointments, news stories, sports scores, weather forecasts, and stock prices. In addition, some or all of the available applications may be location-based or may utilize location information in their operation to increase the ease of use. As maybe appreciated, techniques for accessing these applications, such as a list of telephone or access numbers or an audio or video application menu, may be provided by the service provider to facilitate navigation among the available applications.

### SUMMARY OF THE INVENTION

Certain aspects commensurate in scope with the originally claimed invention are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

In accordance with one aspect of the present invention, there is provided a signal processor. The signal processor may be configured to receive a token selected based upon a composite grammar. The token corresponds to an entry point for one of a plurality of applications. The signal processor may also be configured to access the respective application at the entry point.

In accordance with another aspect of the present invention, there is provided a communications system. The communications system may include a telephony server configured to receive a modulated signal correlative to an audio command and to analyze the modulated signal to identify a constituent of a composite grammar. The telephony server may also be configured to select a token corresponding to the constituent. The communications system may also include a browser module configured to acquire the token and to access an entry point for one of a plurality of applications based upon the token.

In accordance with still another aspect of the present invention, there is provided a method for accessing an application. The method may include the act of processing a signal to identify an audio code as a constituent of a composite grammar. In addition, the method may include the act of accessing an entry point of one of the plurality of applications based upon the constituent of the composite grammar.

In accordance with a further aspect of the present invention, there is provided a tangible computer-readable medium. The medium may include programming instructions stored on the computer-readable medium for processing a signal to identify an audio code as a constituent of a composite grammar. The medium may also include programming instructions stored on the computer-readable medium for accessing an entry point of one of the plurality of applications based upon the constituent of the composite grammar.

In accordance with another aspect of the present invention, there is provided a method for manufacturing a tangible computer medium. The method may include the act of storing, on a computer-readable medium, programming instructions for identifying an audio code as a constituent of a composite grammar. The method may also include the act of storing, on the computer readable medium, programming instructions for accessing an entry point of one of the plurality of applications based upon the constituent of the composite grammar.

In accordance with an additional aspect of the present invention, there is provided a method for manufacturing a telephony system. The method may include the act of providing at least one signal processing device programmed to identify an audio code as a constituent of a composite grammar. In addition, the signal processing device may be programmed to access an entry point of one of the plurality of applications based upon the constituent of the composite grammar.

### BRIEF DESCRIPTION OF THE DRAWINGS

Advantages of the invention may become apparent upon reading the following detailed description and upon reference to the drawings in which:
Fig. 1 discloses an exemplary embodiment of a communications system configured to access two or more applications in accordance with the present invention;
Fig. 2 discloses an exemplary grammar overview in accordance with the present invention; and
Fig. 3 illustrates a flow chart depicting navigation between two exemplary applications in accordance with the present invention.

### DETAILED DESCRIPTION OF SPECIFIC EMBODIMENTS

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

As competition for customers in the cellular telephone industry has increased, service providers have responded by providing additional services, such as access to a variety of applications, including voice mail, news, and weather applications. Such applications may be accessible from a single point, such as a dial tone or mailbox. To improve the accessibility and convenience of the various applications further, various speech centric interfaces may be employed, allowing the subscriber to interact with an application using voice commands or responses. The advantages of speech centric interfaces may be mitigated, however, by the lack of a common user interface between the applications.

In particular, the various applications offered by a service provider may be constructed and/or supported by multiple third party vendors. The third party vendors may actively compete with one another or may simply be unaware or indifferent to other applications. Regardless, applications provided by the third party vendors are typically insular, with each application containing a stand-alone user interface.

As a result, a subscriber wishing to navigate between applications must typically complete the transaction with a first application and exit the first application. The subscriber may then initiate a second application, complete the transaction with the second application, and exit the second application before initiating a third application, and so forth.

Furthermore, subscribers typically must navigate through the various layers or scripts of an application to reach the function or content they seek. For example, to access a weather forecast for a city, a subscriber may have to exit from a first application, initiate the weather application, respond to a prompt to name a city, respond to a prompt to state the desired information, i.e., tomorrow's forecast, and then exit the weather application before returning to the first application. The subscriber, therefore, may be subjected to the tedium of exiting and initiating applications more frequently than desired and of repeatedly navigating through the initial layers of each application to reach the desired function or content. Therefore, it may be desirable to provide subscribers not only with a variety of independent applications, but also with an interface that would allow subscribers to more easily navigate between applications and/or to more easily access specific data from an application.

The techniques disclosed herein provide a unified interface for use with multiple independent applications. Specifically, the techniques disclosed provide for the use of a common listing or vocabulary of audio codes or signals (such as spoken words or phrases or DTMF tones) that generally equate to acceptable responses for a supported bundle of applications, allowing the various applications to be navigated collectively instead of individually. In particular, a unified interface may allow a subscriber to move freely between applications or to access content from an application directly, without having to traverse a maze of preliminary menus and options. In addition, the present techniques provide for the automatic generation of an application to provide a service (herein referred to as the Main Menu) that provides descriptions of and access to a suite of bundled application.

In the context of applications written in VoiceXML, each application has an associated grammar that includes, at least, the various grammars associated with the documents comprising the application. In the context of programming languages such as VoiceXML, a grammar may be thought of as a list of allowable responses or inputs for the respective construct associated with the grammar, i.e., a document or application. In other words, a document of an application may accept as inputs those responses defined in its associated document grammar. Therefore, in the context of VoiceXML or a similar programming language, the present technique might be implemented by establishing a root or system level grammar, which may include the allowable inputs for each application, including the Main Menu, accessible from the respective root or system level.

While the root grammar described provides a global vocabulary or navigational grammar for the supported applications, in practice it may be desirable to supplement such a root grammar based on current circumstances, such as when the subscriber is accessing an application. For example a composite grammar may be employed which, depending on the circumstances, may include only the root grammar (such as when no applications are currently accessed, i.e., at the Main Menu) or may include the root grammar as well as the application grammar for a currently accessed application. The composite grammar may be implemented as a single grammar, i.e. a single grammar including both the root grammar and the application grammar of the currently accessed application. Alternatively, the composite grammar may be implemented as two separate grammars, i.e., the root grammar and current application grammar, which may be simultaneously accessed and/or functionally treated as a single grammar. Where discrepancies or duplications exist between the root grammar and the current application grammar, priority rules, such as giving precedence to the current application in the case of common or duplicative commands, may be employed. The composite grammar provides continuity with the application grammar while maintaining access to the root grammar, thereby providing easy access to other applications and to the Main Menu.

Furthermore, as will be appreciated by those of ordinary skill in the art, a service provider may offer different packages or bundles of applications to subscribers. Different root grammars and Main Menus applications, as described above, may therefore be associated with each bundle of applications. The generation and updating of the various root grammars and Main Menu applications may be performed on a processor-based system, such as a unified interface server configured to query the respective application servers. In this way, the unified interface server may construct suitable root grammars and/or Main Menu applications by querying the appropriate application servers.

While the use of a root grammar in a Voice XML context is one possible implementation of the present technique, one of ordinary skill in the art will appreciate that other implementations are possible. Indeed, the present techniques generally encompasses the use of a vocabulary that includes the accepted audio codes for a plurality of applications and the use of such a vocabulary to navigate between and within the various applications. In this way, the present techniques provide for navigating easily and quickly between otherwise independent applications.

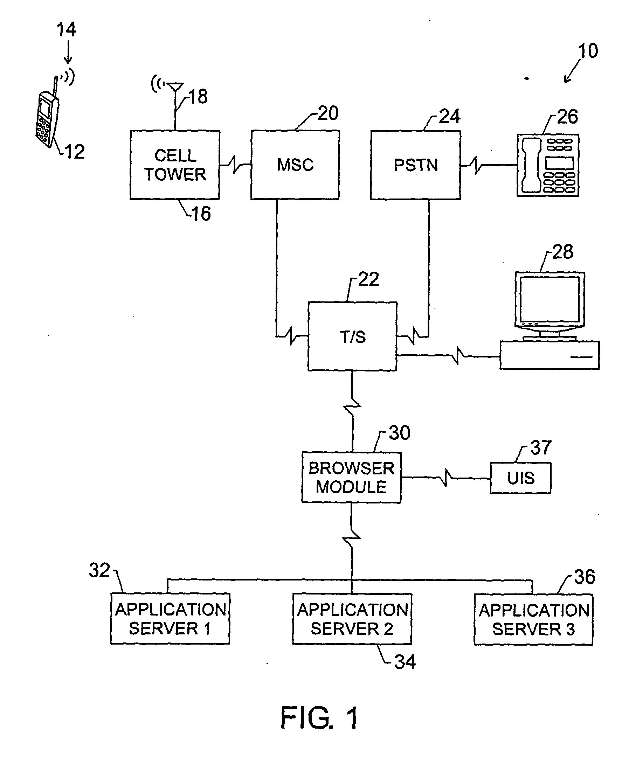

Turning now to the drawings, and referring initially to Fig. 1, an example of a communications system, indicated generally by reference numeral 10, is provided. The depicted communications system 10 includes components supporting telephonic communication between parties as well as access to applications that may be provided or supported by various parties. For example, the communication system 10 includes wireless support for wireless devices, such as one or more cellular telephones 12, PDA devices, and other devices capable of audio communication. Wireless devices, such as the cellular telephone 12, may convert audio signals, such as speech and/or DTMF tones, to an initial modulated signal, which may be transmitted as an electromagnetic signal over an air interface. The signal is received by a base transceiver station, such as a cell tower 16 and associated antenna 18. The cell tower 16 relays the modulated signal, which may comprise the initial modulated signal or an amplified or otherwise processed version of the initial modulated signal to a mobile switching center (MSC) 20.

The mobile switching center 20 is the switch that serves the wireless system. It performs the function of switching calls to the appropriate destination and maintaining the connection. Indeed, a primary function of the mobile switching center 20 is to provide a voice path connection between a mobile telephone and another telephone, such as another mobile telephone or a land-line telephone. A typical mobile switching center 20 includes a number of devices that control switching functions, call processing, channel assignments, data interfaces, tracking, paging, call hand-off, billing, and user data bases.

As part of its operation, the mobile switching center 20 may transmit a modulated signal, which may comprise the relayed modulated signal or an amplified or otherwise processed version of the relayed modulated signal, to a telephony server 22 maintained by the service provider. The modulated signal may be transmitted from the mobile switching center 20 to the telephony server 22 via a physical line, such as a fiber optic cable or copper wire, or via a wireless transmission. For example, the modulated signal may be transmitted over a T1 line using a T1 telephony standard.

Modulated audio signals may also be sent to the telephony server 22 from a Public Switched Telephone Network (PSTN) 24 connected to a land-line phone 26 or other telephonic device. Similarly, the modulated audio signal may originate from a computer 28 connected to a network, such as the Internet, and employing a suitable communication protocol, such as Voice over IP (VOIP).

Once the telephony server 22 receives the modulated audio signal, different operations may be performed based upon whether the received signal represents an attempt to place a phone call or a request to access an available application. For example, the modulated signal may include audio codes, such as a word, a phrase, and/or DTMF tones, which may be recognized as an attempt to access an application or menu of applications. Recognition of the audio code may be accomplished by pattern recognition routines employing various statistical modeling techniques, such as Hidden Markov Models (HMM) or neural nets.

Recognition that the received modulated signal represents an attempt to access an application may result in one or more suitable tokens being sent to a browser module 30, and ultimately to an application server, such as one of application servers 32, 34, 36. In response to the token or tokens, the respective application may transmit a data file to the browser module 30 for subsequent transmission to the originating device, such as cellular phone 12, land-line phone 26, or computer 28. The format of the data file may correspond to the requested data. For example, a voice mail application may respond to a token or token combination by transmitting an audio file corresponding to a requested voice mail to the subscriber. Similarly, applications such as text messaging or e-mail may respond by transmitting data files corresponding to one or more text messages. Other applications, such as web access or photograph album applications, may respond by transmitting data files corresponding to multi-media or video files. In other words, a suitable data file may be returned to the subscriber based on the application, the data requested, and the nature of the originating device. The subscriber may then request additional information from the application if desired.

The token or tokens sent to the browser module 30 may be determined based upon a general vocabulary, such as a composite grammar in VoiceXML implementations, which relates recognized patterns to a respective token or tokens. The recognized pattern may correspond to one or more DTMF tones, one or more spoken words (such as "delete" or "temperature"), or a spoken phrase (such as "will it freeze tonight?"). Furthermore, more than one recognized pattern may correspond to the same token. For example, the recognized patterns for the words "delete," "erase," and "remove" may all invoke the same token, and thereby the same response from the accessed application.

In general, the browser module 30 may receive the token or tokens and may direct and regulate interaction with the respective applications on the application servers 32, 34, 36 based on the token or tokens received. For example, the browser module 30 may receive one or more tokens associated with a data inquiry of an application, such as tokens corresponding to a request for the price of stock. If another application is presently active, the browser module 30 may, unseen to the user, properly exit the active application, such as by sending a suitable token, and provide the tokens to the finance application. The particular document or routine of interest in the finance application may be directly accessed by the tokens to elicit a data file containing the desired data. Alternatively, the browser module 30 may navigate preliminary documents or menus, unseen to the subscriber, to reach the document or routine associated from which the desired data may be elicited.

The browser module 30 may continue to direct subsequent tokens intended for the finance application, such as for additional stock quotes, to the finance application. Once the browser module 30 receives a token corresponding to a different application, the browser module may properly exit the finance application and initiate an interaction with the requested application for the requested data. Even though some audio codes may be common to more than one application (such as the spoken words "delete" or "next") additional tokens (such as "delete" and "e-mail" or "next," "voice," and "mail") in the processing string may be used by the browser module 30 to determine what application is being addressed. Furthermore, the browser module 30 may take into account whether a token (such as "next") makes sense in the context of the currently accessed application, such as a voice mail application, in determining whether to continue communicating with an application. For example, in the context of a VoiceXML application, if the token for "next" is part of the application grammar for the current application, the browser module 30 may address that token to the current application. In this manner, communication with an application may be maintained until a new application is unequivocally addressed, such as by a token which is not in the application grammar of the current application.

As noted above, the token or tokens to be transmitted to the browser module may be determined by reference to a common vocabulary, typically disposed on the telephony server 22, which equates recognized patterns with appropriate tokens. As discussed above, one example of such a common vocabulary may be a composite grammar for use with applications written in VoiceXML. The common vocabulary may be generated, in part or in whole, by a unified interface server 37, or other processor-based system, which may communicate with the browser module 30 to coordinate the generation and update of root grammars and/or Main Menu applications throughout the system 10.

The composite grammar provides a reference for equating a recognized pattern corresponding to a spoken word, spoken phrase, or DTMF tone to a semantic interpretation, i.e., a token, which may be employed in the present technique as described herein. As one of ordinary skill in the art will appreciate, the semantic interpretation may be a simple value (such as a string), a flat set of attribute-value pairs (such as a day, month, and year), or a nested object. In this manner, the composite grammar provides a mechanism for translating a recognized word, phrase or tone into an input expected by at least one supported application. In response to the token the application, or a document of the application, may provide a desired output, such as the next voice mail message, a stock quote, a sports score, and so forth.

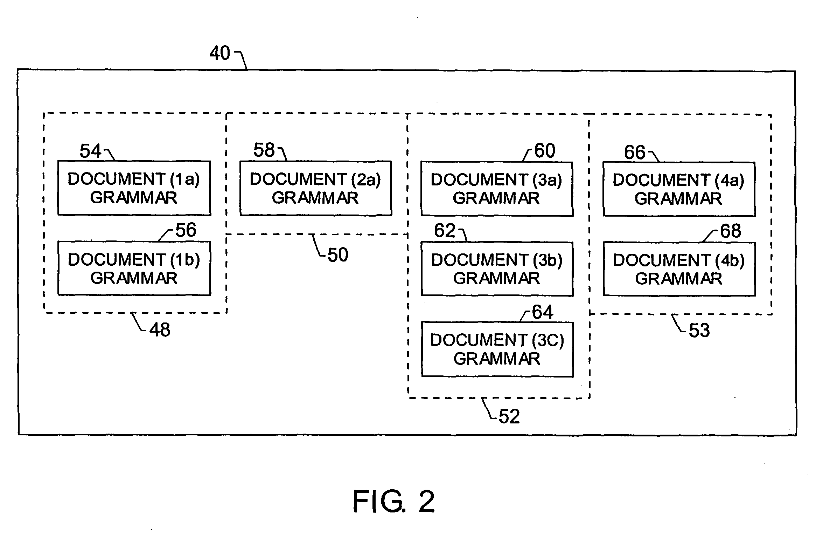

By means of example, and referring now to Fig. 2, a graphic representation of a root grammar 40 and its relation to associated application and document grammars is provided. As depicted in Fig. 2, the root grammar 40 may be associated with a plurality of applications and an automatically generated Main Menu application, each having a respective application grammar 48, 50, 52, 53. Each application grammar in turn encompasses the respective document grammars for the documents comprising that application. For example, the first application grammar 48 may include at least the grammars for the documents of the first application, i.e., document (1a) grammar 54 and document (1b) grammar 56, as depicted in Fig. 2. Similarly, the second application grammar 50 may include at least the document (2a) grammar 58, and the third application grammar 52 may include at least the document (3a) grammar 60, the document (3b) grammar 62, and the document (3c) grammar 64. In addition, the Main Menu application grammar 53 may include document grammars related to help, such as document (4a) grammar 66, and to tutorials, such as document (4b) grammar 68.

In practice, the browser module 30 may generate the root grammar 40. For example, the browser module 30 may query the respective applications to elicit the respective application grammars 48, 50, 52, from which the root grammar 40 may be generated. The browser module 30 may, in turn, publish the root grammar 40 to a platform upon which it may be queried, such as the unified interface server 37. Alternatively, the service provider may examine the application grammars 48, 50, 52 to determine the components of the root grammars and submit them to the browser module 30 for publication into the root grammar 40. In addition, the application providers themselves may submit the grammars elements that they deem to be applicable to be published in the root grammar 40.

As described above, the root grammar 40 of the present technique may include the respective application grammars 48, 50, 52. Therefore, words, phrases, or tones recognized as being a constituents of the root grammar 40 may be used to select a token or token string corresponding to a respective application and document referenced by the root grammar 40. The token or token string may, in turn, be used to access the appropriate level or document of the application directly, without having to navigate through intervening layers or documents of the application. In addition, as noted above, the root grammar may access the Main Menu application created by the grouping of the applications into a bundle.

Though VoiceXML is one language that may be used to implement speech centric applications, other standardized languages and/or proprietary languages may also be employed. To the extent that a speech centric application recognizes words, phrases, or tones having corresponding tokens, i.e., possesses a grammar, the present technique is applicable. In particular, the present technique may be useful for navigating between multiple applications where each application possesses multiple entry points, i.e., levels, documents, or sub-routines, that may be directly accessed by the proper token or tokens.

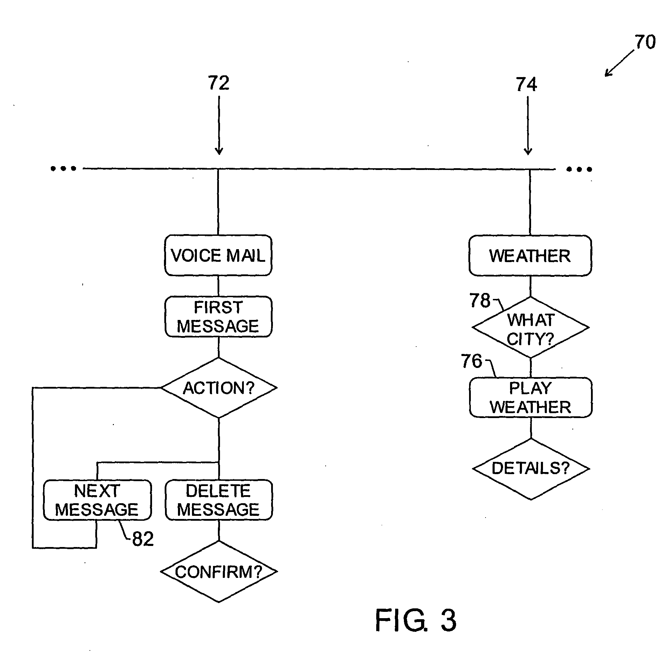

Referring now to Fig. 3, an example of an interaction between a user and two applications using the present technique is provided. As depicted in Fig. 3, a number of applications 70, such as the depicted voice mail application 72 and weather application 74 may be available to a subscriber. In VoiceXML implementations, a root grammar 40 may be employed, allowing the subscriber to freely navigate between applications 70. For example, the subscriber may initially wish to get a list of service that are available in the bundle by saying "what can I do" thereby eliciting the help tutorial from the Main Menu.

Alternatively, the subscriber may wish to bypass the Main Menu as well as application preliminary menus. For example, the user may verbally state "Miami, weather for next Friday" to elicit responsive data from the play weather document 76 of the weather application 74. Because the statement by the subscriber contains words that are constituents of the document grammar of the play weather document 74, otherwise intervening steps, such as the elicitation of a city at decision block 78, may be bypassed.

Subsequent to checking the weather, the user may wish to check the second queued message in the voice mail application 72. The user may verbally state "next message" to access the next message document 82, thereby eliciting the second message in his voice mail queue.

As set forth in these examples, the statements of the subscriber provide sufficient information, i.e., generate the necessary tokens, to directly access application entry points, such as documents in the case of VoiceXML applications, which might not ordinarily be accessed in this manner. As used herein, the term entry points with respect to applications generally refers to documents, sub-routines, levels or other programming constructs that may be accessed with suitable inputs, such as tokens or other semantic interpretations, to elicit a desired response, such as a data file. In addition, as set forth in the preceding example, the implementation of a composite grammar 40 (consisting of the root grammar as well as the application grammar of a currently accessed application, if applicable) such as at the telephony server 22, allows a browser module 30 to navigate between applications and between documents of applications without forcing the user to consciously exit applications or linearly navigate intervening application levels, i.e., documents.

With regard to implementation of the present techniques, either or both of the telephony server 22 and the browser module 30 may be based on a signal processing unit capable of implementing some or all of the techniques described herein, such as through software, hardware, of any suitable combination thereof. For example, the telephony server 22 and/or the browser module 30 may be a general purpose device, such as a general purpose computer or server, with the appropriate software programming to carry out these techniques. Alternately, the telephony server 22 and/or the browser module 30 may use special purpose processors, hardware, and/or software to carry out these techniques. Example of such special purpose processors and hardware include digital signal processors, RISC processors, or application specific integrated circuits, which may be specifically adapted to perform the present techniques. Furthermore, the functions of the browser module 30 and the telephony server 22 may be combined on a single processor-based system if so desired. In one implementation, the telephony server 22 and browser module 30 may be deployed on separate general purpose computers within a telephony complex, such as an ANYPATH® telephony complex.

While the invention may be susceptible to various modifications and alternative forms, specific embodiments have been shown by way of example in the drawings and have been described in detail herein. However, it should be understood that the invention is not intended to be limited to the particular forms disclosed. Rather, the invention is to cover all modifications, equivalents, and alternatives falling within the spirit and scope of the invention as defined by the following appended claims.

## Claims

1. A signal processor configured to receive a token selected based upon a composite grammar, wherein the token corresponds to an entry point for one of a plurality of applications, and configured to access the respective application at the entry point.

2. The signal processor, as set forth in claim 1, wherein the signal processor is configured to exit a previous application without receiving an exit instruction from a subscriber.

3. The signal processor, as set forth in claim 1, wherein the signal processor is configured to receive a responsive data file from a level of the respective application corresponding to the entry point and configured to transmit the data file to a telephony server.

4. The signal processor, as set forth in claim 1, comprising:
a telephony server configured to receive a modulated signal correlative to an audio command, to analyze the modulated signal to identify a constituent of a root grammar, to select the token corresponding to the constituent, and to transmit the token to the signal processor.

5. A communications system, comprising:
a telephony server configured to receive a modulated signal correlative to an audio command, to analyze the modulated signal to identify a constituent of a composite grammar, and to select a token corresponding to the constituent; and
a browser module configured to acquire the token and to access an entry point for one of a plurality of applications based upon the token.

6. The communications system, as set forth in claim 5, comprising:
a plurality of application servers, wherein each application server is configured to execute at least one of the plurality of applications, wherein each application comprises at least one entry point which may be accessed by a corresponding token.

7. The communications system, as set forth in claim 5, comprising:
a mobile switching center configured to transmit the modulated signal to the telephony server.

8. A method for accessing an application, the method comprising the acts of:
processing a signal to identify an audio code as a constituent of a composite grammar; and
accessing an entry point of one of the plurality of applications based upon the constituent of the composite grammar.

9. The method, as set forth in claim 8, comprising the acts of:
sending a data file to a user, wherein the data file is generated in response to accessing the entry point.

10. The method, as set forth in claim 8, wherein accessing the entry point comprises transmitting an indicator to the respective application that the audio code was identified in the processed signal.
